# DEMANDE DE BREVET EUROPEEN

(11) **EP 2 055 184 A1**
(43) Date de publication de la demande: **06.05.2009**
(21) Numéro de dépôt: 08168246.0
(22) Date de dépôt: 04.11.2008
(51) Int. Cl.: A01K 27/00

(54) **Collier réglable en longueur**

(30) Priorité: 05.11.2007 FR 0707736
(71) Demandeur: Bellezza, François, 57410 Rohrbach les Bitche (FR)
(72) Inventeur: Bellezza, François, 57410 Rohrbach les Bitche (FR)
(74) Mandataire: Vièl, Frédérique

(57) **Abrégé**

L'invention concerne un collier (1) dont le diamètre peut être réglé, notamment pour animal domestique, constitué d'une première bande (10), d'une deuxième bande (20, 53), et de moyens pour régler le diamètre du collier constitué de deux éléments de serrage (50, 50'), constitués chacun de préférence par une sangle ou un fil ; des moyens de guidage étant prévus pour guider les éléments de serrage (50, 50') sur la face extérieure de la première bande (10) ; l'un au moins des éléments de serrage (50, 50') étant muni d'un anneau (54, 54').

Le collier de l'invention se distingue par les caractéristiques supplémentaires suivantes :
- les extrémités (21, 531) de la deuxième bande (20, 53) sont placées par-dessus la première bande (10) de telle sorte que les extrémités (11) de la première bande (10) peuvent coulisser sur la face intérieure de la deuxième bande (20, 53) en s'approchant ou en s'éloignant du plan médian transversal de la deuxième bande (20, 53) et que les extrémités (21, 531) de la deuxième bande (20, 53) peuvent coulisser sur la face extérieure de la première bande (10) en s'approchant ou en s'éloignant du plan médian transversal de la première bande (10), les deux bandes (10, 20, 53) formant ensemble un cercle dont le diamètre peut varier selon le niveau de chevauchement de la deuxième bande (20, 53) sur la première bande (10) ; et
- chacun des éléments de serrage prolonge d'un côté et de l'autre la deuxième bande (20, 53) ou passe par-dessus celle-ci en rejoignant l'autre, et passe par-dessus la première bande (10) ;
- les moyens de guidage (12, 14, 60) de la première bande (10) sont situés de préférence de part et d'autre du plan médian transversal de ladite première bande (10) pour guider le coulissement des éléments de serrage (50, 50') de sorte que la partie de ceux-ci (51, 51') située par rapport aux moyens de guidage (12, 14, 60) du côté de la deuxième bande (20, 53), appelée partie guidée, reste en contact avec la première bande (10) tandis que l'autre partie (52, 52') des moyens de serrage (50, 50'), appelée partie libre, peut s'éloigner du collier avec le ou les anneaux (54, 54').

## Description

L'invention concerne un collier, notamment pour animal domestique, selon le préambule de la revendication principale.

On connaît de nombreux colliers pour animaux domestiques. Le plus courant est constitué d'une sangle, en cuir ou en nylon, dont l'une des extrémités est percée de trous et dont l'autre extrémité est munie d'une boucle à travers laquelle peut passer la première extrémité. Une ou plusieurs pointes de la boucle sont alors introduites dans le ou les trous correspondant à la circonférence adaptée au cou de l'animal.

L'inconvénient de ce type de colliers, semblable à une ceinture, réside dans le fait qu'il faut les réaliser dans différentes dimensions pour tenir compte des différentes tailles d'animaux concernés. En effet, il n'est pas possible que l'extrémité libre sortant de la boucle soit trop longue. De plus, le diamètre du collier est imposé par la répartition discrète des trous. Ils ne permettent donc pas un réglage très précis du diamètre du collier.

On a donc proposé des colliers de longueur réglable dans lesquels la première extrémité de la sangle est munie d'un premier moyen de fixation et la seconde extrémité se rabat sur elle-même, le second moyen de fixation étant placé sur la boucle formée par l'extrémité rabattue sur elle-même. Des moyens sont prévus pour permettre à la seconde extrémité de coulisser sur la sangle pour régler la longueur du collier. On peut donc ajuster la longueur du collier à la taille souhaitée sans pour autant permettre de doubler la longueur du collier entre la position la plus courte et la position la plus longue.

Ces colliers réglables présentent cependant de nombreux inconvénients. En raison des moyens de réglage de la longueur peu résistants, ils ne sont pas adaptés aux animaux pouvant exercer une traction importante sur leur laisse. En effet, la boucle et/ou le système de fermeture risquent de casser.

De plus, les moyens de réglage de la longueur sont constitués généralement par une boucle à trois barres transversales. L'extrémité libre de la sangle est cousue sur elle-même après être passée sur la barre transversale centrale et la sangle est passée autour de cette même barre centrale en passant sous les deux barres extérieures. Autrement dit, au niveau de cette boucle, on peut avoir jusqu'à trois épaisseurs de sangle plus l'épaisseur de la boucle. De plus, pour permettre à la boucle de « s'aplatir » au niveau des moyens de fermeture, il faut que le matériau utilisé soit suffisamment souple. En outre, afin de permettre le réglage de la longueur du collier, celui-ci ne doit pas être muni de décors tridimensionnels. Ces colliers sont donc en général d'un esthétisme particulièrement sobre.

Par ailleurs, tous ces colliers nécessitent beaucoup de place pour leur rangement, en général pendus à des crochets.

On connaît du document US 4,841,915 A un collier pour animal domestique constitué d'une première bande et d'une seconde bande et de moyens pour régler le diamètre du collier. Les extrémités de la première bande sont reliées aux extrémités de la deuxième bande par l'intermédiaire de deux ferrures de sorte à définir un trou circulaire pouvant laisser passer la tête d'un animal. La deuxième bande, en partant de la première ferrure à laquelle sa première extrémité est fixée, tourne autour du cou de l'animal en passant à travers un élément de serrage, puis traverse la deuxième ferrure, passe par-dessus la première bande, traverse ensuite la première ferrure, passe à nouveau à travers l'élément de serrage comme la première fois et la deuxième extrémité est fixée à la deuxième ferrure. En d'autres termes, dans la partie basse du collier entre les deux ferrures, le collier est constitué de la première bande recouverte d'une section de la deuxième bande tandis que dans la partie supérieure, le collier est constitué par deux sections superposées de la deuxième bande. Un anneau est passé sur la deuxième bande dans la boucle extérieure au niveau de l'élément de serrage. En tirant sur l'anneau, on provoque le serrage du collier. Ce collier à pour inconvénient qu'on retrouve au niveau des ferrures, une fois encore trois épaisseurs de sangle. De plus, les ferrures utilisées ne sont pas courantes. En outre, la deuxième bande est particulièrement longue. Enfin, il n'est pas possible de placer des décors sur ces bandes.

L'objectif de l'invention est donc de proposer un collier dont le diamètre puisse être réglé tout en permettant de couvrir une grande fourchette de taille, proche du simple au double, tout en permettant de diminuer la longueur totale des bandes. Un autre objectif de l'invention est de permettre d'ajouter des motifs sur le dessus comme sur le dessous du collier. Il doit en outre être suffisamment résistant pour être utilisé avec des animaux exerçant une traction importante sur leur laisse. Un autre objectif de l'invention est de proposer un collier qui puisse être ouvert pour ne pas nécessiter le passage de la tête de l'animal à travers une boucle afin de ne pas forcer les oreilles à travers cette dernière.

Cet objectif est atteint conformément à l'invention du fait que le collier, outre les éléments évoqués au préambule comprend également les caractéristiques suivantes :
- les extrémités de la deuxième bande sont placées par-dessus la première bande de telle sorte que les extrémités de la première bande peuvent coulisser sur la face intérieure de la deuxième bande en s'approchant ou en s'éloignant du plan médian transversal de la deuxième bande et que les extrémités de la deuxième bande peuvent coulisser sur la face extérieure de la première bande en s'approchant ou en s'éloignant du plan médian transversal de la première bande, les deux bandes formant ensemble un cercle dont le diamètre peut varier selon le niveau de chevauchement de la deuxième bande sur la première bande ; et
- chacun des éléments de serrage prolonge d'un côté et de l'autre la deuxième bande ou passe par-dessus celle-ci en rejoignant l'autre, et passe par-dessus la première bande ;
- les éléments de serrage passent à travers les moyens de guidage de la première bande de sorte que la partie des éléments de serrage située par rapport aux moyens de guidage du côté de la deuxième bande, appelée partie guidée, reste en contact avec la première bande tandis que l'autre partie des moyens de serrage, appelée partie libre, peut s'éloigner du collier avec le ou les anneaux, les moyens de guidage étant de préférence situés de part et d'autre du plan médian transversal de ladite première bande.

Ainsi, lorsqu'on tire sur le ou les anneaux, on tire sur les éléments de serrage qui eux-mêmes tire sur la deuxième bande et provoque le coulissement de ses extrémités sur la première bande et donc la diminution du diamètre du collier. Les éléments de serrage sont plaqués contre la première bande par les moyens de guidage, mais les brins qui viennent de la deuxième bande peuvent une fois passé les éléments de guidage s'écarter du collier avec l'anneau auquel ils sont fixés lorsque ce dernier est tiré. Cette solution est beaucoup plus simple à réaliser et ne nécessite pas de replier sur elle-même une extrémité de bande pour la fixer à une boucle métallique. De plus, la longueur totale des bandes est nettement diminuée.

Les éléments de serrage, qui peuvent être par exemple des sangles ou des fils, peuvent faire le tour complet du collier, donc passer non seulement sur la première bande, mais également sur la deuxième bande. Dans ce cas, leurs extrémités guidées sont jointes au niveau de la deuxième bande et il est même préférable que les deux éléments de serrage soient constitués par une seule et même sangle ou un seul et même fil. Si les éléments de serrage sont constitués par une sangle unique, la partie centrale de la sangle peut de façon avantageuse remplir la fonction de deuxième bande. Il est alors possible de renoncer à cette bande distincte.

Il est cependant également possible de fixer les extrémités de la partie guidée des éléments de serrage sur la deuxième bande, de préférence près de ses extrémités. Selon la configuration retenue, on peut choisir des matériaux différents pour la deuxième bande.

Pour éviter que le collier ne se desserre tout seul, il est possible de le munir de moyens de retenue pour retenir les éléments de serrage dans la position souhaitée.

Afin d'assurer un bon guidage de la deuxième bande sur la première bande lors du coulissement, il est préférable de munir les extrémités de la première bande et/ou les extrémités de la deuxième bande de guides, ayant par exemple la forme d'anneaux de section rectangulaire, dans lesquels passent les extrémités de l'autre bande.

Dans un mode de réalisation privilégié, le collier comprend en outre d'une troisième bande, les extrémités de la deuxième bande et les éléments de serrage passant entre la première bande et la troisième bande, la troisième bande recouvrant de préférence la première bande et étant de préférence fixée à celle-ci, la troisième bande pouvant être coupée en deux pièces par son milieu ou être munie en son centre d'une ouverture à travers laquelle passe le ou les anneaux et la partie libre des éléments de serrage lorsque le collier est serré. Cette troisième bande peut porter des décors.

Dans une première variante, la première bande et la troisième bande sont cousues ensemble par leurs bords latéraux ou la première bande et la troisième bande forment un élément en une seule pièce formant un fourreau dans lequel coulissent les extrémités de la deuxième bande et les éléments de serrage.

Dans une deuxième variante, la première bande est munie à ses extrémités de guides, ayant de préférence la forme d'anneaux de section rectangulaire, et la troisième bande est munie à ses extrémités de crochets pouvant s'engager sous les guides de la première bande en vue de la fixation de la troisième bande. Ainsi, la troisième bande est amovible ce qui permet un changement facile des décors du collier.

Afin de permettre la mise ne place du collier sans faire passer la tête du chien à travers une boucle, il est préférable de couper la première bande en deux parties et de placer un élément de fermeture entre les deux extrémités centrales des deux parties de la première bande.

Dans un mode de réalisation particulièrement simple de l'invention, les extrémités des éléments de serrage opposées à la deuxième bande sont jointes ensemble. Dans ce cas, les deux éléments de serrage sont de préférence constitués par une seule et même sangle ou un seul et même fil.

Dans un mode de réalisation privilégié de l'invention, les moyens de guidage de l'élément de serrage sont constitués d'une plaque fixée, par exemple par des rivets, sur le centre de la première bande, munie à ces deux extrémités d'une fente de passage et en son centre d'une ouverture de sortie de sorte que les éléments de serrage peuvent entrer dans la plaque de guidage par les fentes d'extrémité et en sortir avec le ou les anneaux par l'ouverture de sortie. Cette plaque est de préférence métallique.

Afin d'éviter que la partie de l'élément de serrage qui dépasse du collier lorsque le collier est mis autour de cou de l'animale lorsque la laisse n'est pas fixée à l'anneau n'aille s'accrocher quelque part, il est préférable de munir le collier de moyens de rétractation des parties libres des éléments de serrage qui dépassent du collier lorsque celui-ci est partiellement ou totalement serré. Ces moyens de rétractation peuvent être constitués de deux élastiques, chacun des élastiques ayant l'une de ses extrémités solidaire d'un anneau et l'autre fixée sur la deuxième bande, de préférence près de l'extrémité, ou sur la partie guidée des éléments de serrage, chaque élastique étant de préférence solidaire de la partie libre de l'un des éléments de serrage, notamment en passant plusieurs fois à travers la partie libre pour former un accordéon. Ces moyens de rétractation peuvent également être constitués d'un élastique dont l'une des extrémités est fixée à un anneau et l'autre est fixée à la première bande en passant de préférence par un guide situé au centre de la première bande. Ce troisième élastique sert essentiellement à guider la rétractation de l'anneau au centre de l'ouverture de la troisième bande ou au centre des moyens de guidage de l'élément de serrage.

Pour permettre un remplacement facile des décors sur la bande inférieure du collier, il est également possible de prévoir une quatrième bande amovible pouvant recouvrir la deuxième bande en étant fixé à celle-ci par des moyens de fixation, notamment par des languettes pouvant enserrer la deuxième bande et munies de boutons pression ou de bande autoagrippantes et/ou de moyens pour la fixer sur les extrémités qui coulissent contre la première bande.

L'invention est décrite plus en détail par la suite à l'aide d'exemple de réalisation.
- Figure 1a, b :: vues schématiques d'un premier exemple de réalisation du collier (a) en position élargie et (b) en position serrée ;
- Figure 2 :: vue schématique du collier de la figure 1b muni de moyens de retenue ;
- Figure 3 :: vue schématique d'un deuxième exemple de réalisation du collier en position ouverte ;
- Figure 4 :: vue schématique d'une troisième bande pour un collier selon la figure 3 ;
- Figure 5 :: vue du collier de la figure 3 muni de la troisième bande de la figure 4 ;
- Figure 6 :: vue schématique d'une plaque de guidage ;
- Figures 7a, b :: vue schématique d'un troisième exemple de réalisation muni de moyens de rétractation, (a) avant rétractation et (b) après rétractation ;
- Figures 8a, b, c :: vues en coupe schématique du troisième exemple de réalisation, (a) avant rétractation, (b) après rétractation et (c) vue agrandie selon (a) ;

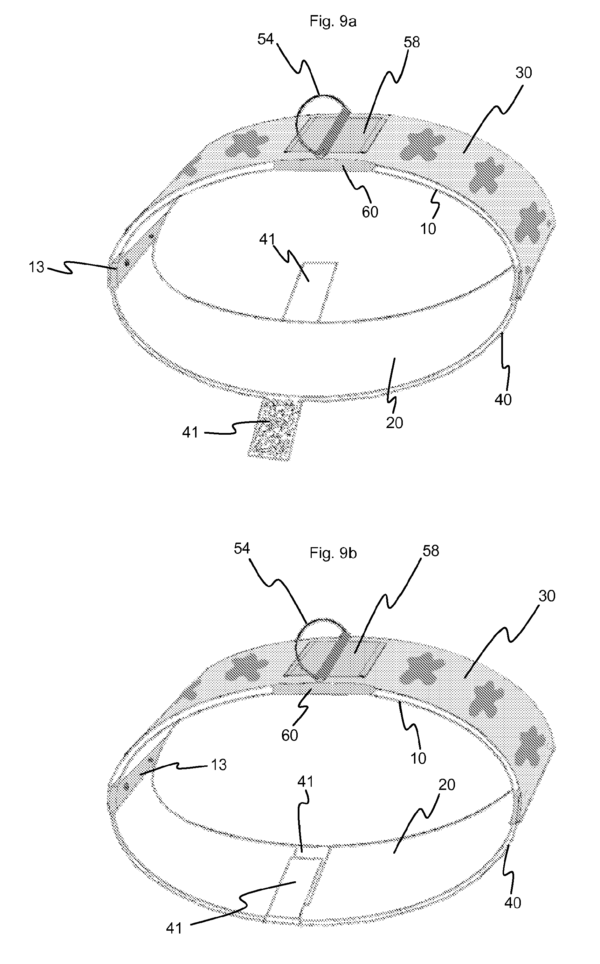

- Figure 9a, b :: vues schématiques d'un quatrième exemple de réalisation avec une quatrième bande amovible avec bandes de fixation (a) ouvertes et (b) fermées ;
- Figure 10a, b, c: : vues schématiques d'un cinquième exemple de réalisation dans lequel la deuxième bande et les moyens de serrage ne font qu'une pièce, la première bande est munie de moyens d'ouverture et les extrémités des moyens de serrage ne sont pas jointes au niveau de l'anneau, (a) en position desserrée, (b) en position serrée, (c) en position ouverte ;
- Figure 11a, b :: vue schématique du collier de la figure 10 avec une troisième bande en deux morceaux et d'une quatrième bande, (a) en vue éclatée et (b) à l'état monté.

Le collier conforme à l'invention comprend essentiellement une première bande (10), et une seconde bande (20/53) qui se poursuit de part et d'autre par des éléments de serrage (50, 50'). La première bande (10) et la seconde bande (20) sont placées l'une en face de l'autre de telle sorte que les extrémités (11) de la première bande (10) viennent coulisser contre la face intérieure de la deuxième bande (20/53) en s'approchant ou en s'éloignant du plan médian transversal de la deuxième bande (20/53) et que les extrémités (21) de la deuxième bande (20) viennent coulisser contre la face extérieure de la première bande (10) en s'approchant ou en s'éloignant du plan médian transversal de la première bande (10). Chaque bande, mise à plat, a sensiblement la forme d'un rectangle allongé. Le plan médian transversal est le plan qui coupe ce rectangle en son milieu perpendiculairement à la longueur. À l'état monté, ces deux bandes (10, 20/53) forment un cercle dont le diamètre dépend du taux de chevauchement des deux bandes.

Les éléments de serrage (50, 50') sont constitués d'une sangle ou d'un fil. Selon les modes de réalisations, ces éléments de serrage font le tour complet du collier ou au contraire ils ont leur première extrémité fixée à la deuxième bande (20). Dans tous les cas, les éléments de serrage (50, 50') passent par-dessus la première bande (10) et traversent un élément de guidage (12) placé sur la première bande (10) à proximité de son plan médian transversal. Ainsi, les éléments de serrage se divisent au moins en deux parties : la première partie qui se situe entre la deuxième bande (20) et l'élément de guidage (12), partie dite guidée, et la deuxième partie (52) qui se trouve au-delà de l'élément de guidage (12), partie dite libre. La longueur de ces deux parties varie en fonction du taux de chevauchement des deux bandes (10, 20/53). On verra plus loin que dans certains modes de réalisation, il existe encore une troisième partie (53).

Les éléments de serrage (50, 50') peuvent avoir leurs extrémités libres (extrémités situées par rapport aux moyens de guidage du côté opposé à la première bande (20/53)) séparées, chacune portant un anneau (54, 54'). Il est cependant également possible de ces extrémités libres soient jointes et qu'il n'y ai qu'un seul anneau (54). Dans ce dernier cas, les deux éléments de serrage peuvent être constitués d'une seule et même sangle ou un seul et même fil.

Les différents exemples de réalisation sont présentés ci-dessous plus en détail.

Dans sa version de base, le collier (1) est constitué d'une première bande (10) qui viendra sur l'arrière du cou de l'animal et d'une deuxième bande (20) qui sera placée sur la gorge de l'animal. Les extrémités (21) de la deuxième bande (20) passent sur la première bande (10). Une sangle (50) fait le tour de la deuxième bande (20) et de la première bande (10). Elle est munie du côté de la première bande (10) d'un anneau (54) pour la fixation d'une laisse non représentée. De part et d'autre de l'anneau (54), la sangle (50) passe dans des éléments de guidage (12) qui sont fixés sur la première bande (10).

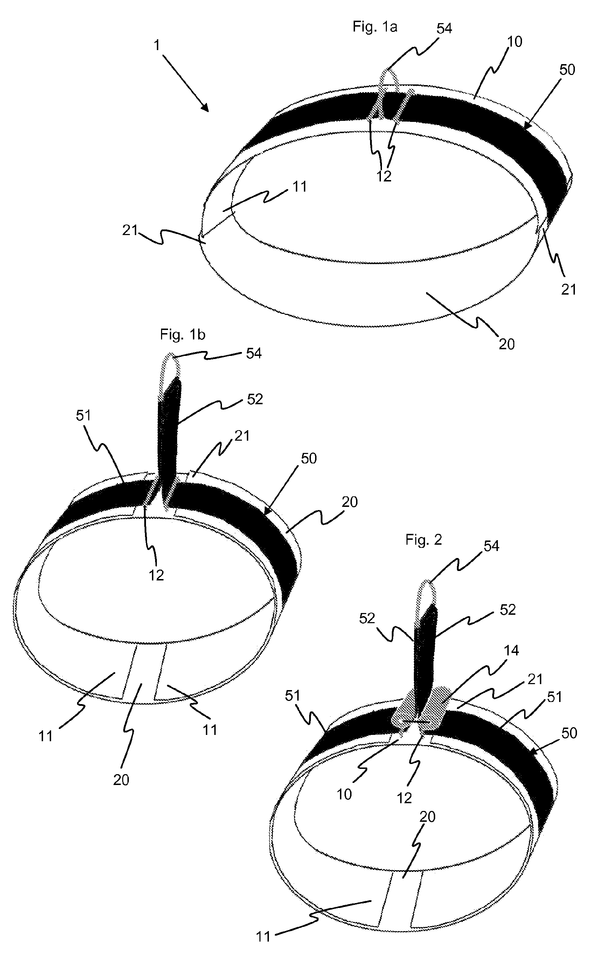

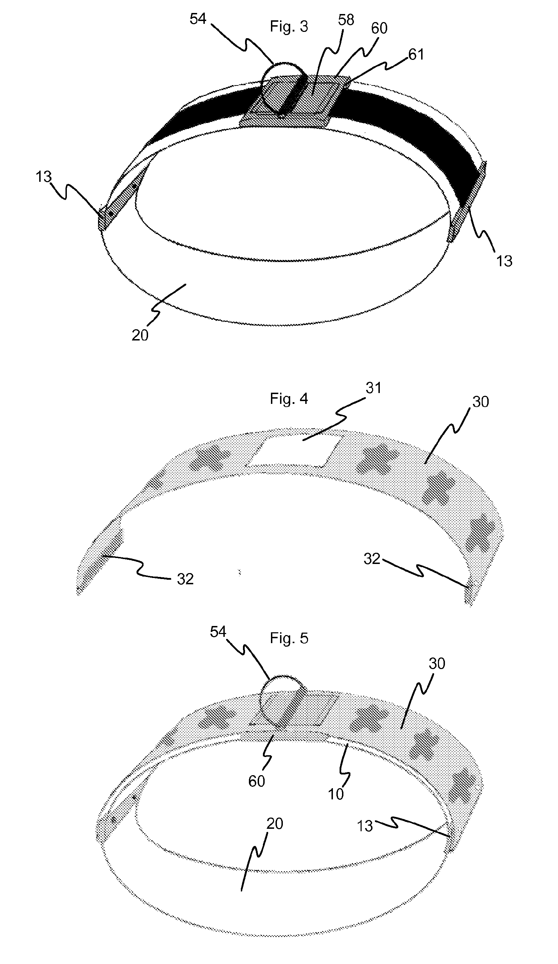

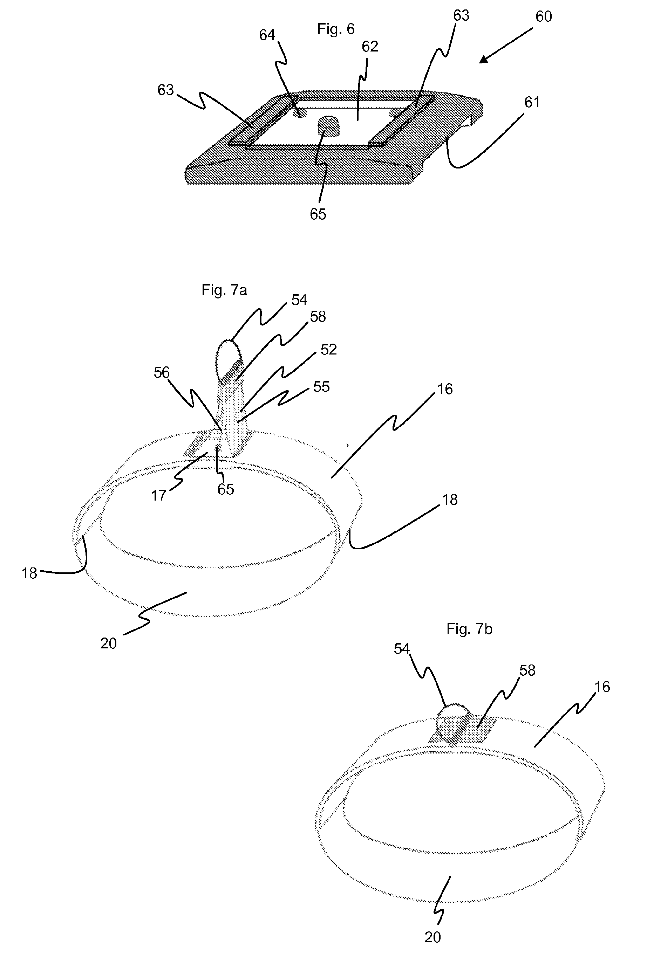

Les moyens de guidage peuvent être constitués de simples arceaux (12) comme sur les figures 1. Ils peuvent également être constitués par une plaque (60) munie à ses extrémités de deux fentes de passage (61) et en son centre d'une ouverture de sortie (62). La plaque (60) est fixée au centre de la première bande (10), par exemple par des rivets (64). Les deux brins (52) de la sangle (50) qui viennent de la deuxième bande (20) passent chacun par une des fentes de passage (61) et ressortent par l'ouverture de sortie (62). Les deux extrémités de ces brins (52) se rejoignent au niveau de l'anneau (54) comme on peut le voir sur la figure 7a. Lorsque le collier est entièrement desserré, seul l'anneau (54) dépasse de l'ouverture de sortie (62) comme le montre par exemple la figure 3. Par contre lorsque le collier est serré, une partie (52) de la sangle sort de l'ouverture (62) et dépasse hors du collier.

Pour serrer le collier, il faut d'une part tirer sur l'anneau (54) et d'autre part retenir le collier au niveau des moyens de guidage (12, 60). En effet, il ne serait sinon pratiquement pas possible de serrer le collier. De ce fait, ce collier n'est pas un collier étrangleur, et il n'est pas possible que l'animal en tirant sur sa laisse provoque un serrage supplémentaire de son collier.

Lorsque l'on tire sur l'anneau (54) en retenant le collier au niveau des moyens de guidage, on tire également sur la sangle (50) qui va faire remonter la deuxième bande (20) en faisant coulisser ses extrémités (21) le long de la première bande (10). Le diamètre du collier est ainsi réduit. Il est préférable que les éléments de guidage (12, 60) soient munis de moyens de retenue (14) pour maintenir le collier à la taille désirée et l'empêcher de se desserrer. Ces moyens de retenue (14) n'ont pas besoin d'être très résistants, car ils ne sont soumis à aucune contrainte importante dans la mesure où en principe rien ne risque de provoquer un desserrage involontaire du collier. Dans un exemple de réalisation, l'arceau (12) peut être très proche de la première bande (10) de sorte que la sangle (50) soit retenue par cet arceau qui remplit donc aussi bien la fonction de guidage que la fonction de retenue.

Pour permettre un bon guidage des extrémités (21) de la deuxième bande sur la première bande, il est préférable de prévoir des guides sur les extrémités (11) de la première bande (10) et/ou sur celles (21) de la deuxième bande (20), l'autre bande passant à travers ces guides. Dans l'exemple des figures 3 et 5, la première bande (10) est munie de deux guides (13) dans lesquels peut coulisser la deuxième bande (20) ainsi que la sangle (50).

Dans un deuxième mode de réalisation, les moyens de guidage de la sangle sont constitués d'une troisième bande (30) munie en son centre d'une ouverture (31) à travers laquelle peut passer l'anneau (54) et la partie (52) de la sangle qui dépasse lorsque le diamètre du collier est diminué. La troisième bande (30) a des dimensions telles qu'elle recouvre la première bande (10). Les deux bandes peuvent être cousues ensemble par leurs bords latéraux de sorte qu'elles forment un fourreau dans lequel viennent coulisser les extrémités (21) de la deuxième bande (20) ainsi que la sangle (50). Les bords transversaux de l'ouverture de passage peuvent suffire comme moyens de guidage. Il peut cependant être préférable de les renforcer par une plaque de guidage (60).

Le dispositif de retenue peut être placé sur les bords transversaux de l'ouverture de passage (31) pour l'anneau (54) et la sangle (50).

Au lieu de la première bande (10) et de la troisième bande (30), il est également possible de prévoir un élément d'une seule pièce (16), par exemple en plastique, formant en son centre le fourreau dans lequel passent les extrémités (21) de la deuxième bande (20) et la sangle (50). Sur la face extérieure de cet élément en une pièce (16), on retrouve l'ouverture (17) pour le passage de l'anneau (54) et de la sangle (50). La face supérieure de cet élément en une pièce (16) et son ouverture (17) forment les moyens de guidage de la sangle (50), tandis que les ouvertures extérieures (18) du fourreau forment les moyens de guidage de la deuxième bande (20) et de la sangle (50).

En jouant sur l'épaisseur du fourreau, par exemple au niveau des ouvertures (18), il est possible de renoncer à des moyens de retenue pour la sangle (50). Le frottement exercé par ces endroits rétrécis suffit à empêcher le diamètre du collier de s'agrandir si aucune force extérieure n'est exercée pour écarter volontairement la deuxième bande (20) de l'élément en une seule pièce (16).

Pour éviter que l'extrémité de la sangle (52) qui pend hors des moyens de retenue ou de l'ouverture (62, 16, 31) lorsque le collier est mis sur le cou de l'animal et que la laisse est retirée, ne risque de s'accrocher quelque part lorsque l'animal se déplace, il est préférable de prévoir des moyens de rétraction de la partie (52) de la sangle qui dépasse des moyens de guidage (12, 31, 60).

Ces moyens de rétractation sont constitués de deux élastiques (55) rendus chacun solidaire d'un des deux brins (52) de la sangle qui peuvent saillir du collier avec l'anneau lorsque le collier est serré. Il est par exemple possible de plisser ces deux brins (52) et de faire passer l'élastique (55) à travers l'accordéon formé dans cette partie de la sangle. La première extrémité de l'élastique est fixée par exemple à l'anneau (54) tandis que la deuxième est fixée à la deuxième bande (20), de préférence à une certaine distance de l'extrémité (21) coulissant le long de la première bande (10). Il est également possible de fixer cette deuxième extrémité sur la sangle elle-même. Afin de guider également l'anneau (54), il est préférable de prévoir un troisième élastique (56) dont l'une des extrémités est fixée sur l'anneau (54) et l'autre extrémité est fixée sur la première bande (10) après être passée par un guide (65) situé au centre de l'ouverture de sortie (31) de la bande ou au centre des moyens de guidage (12, 60) fixés sur celle-ci.

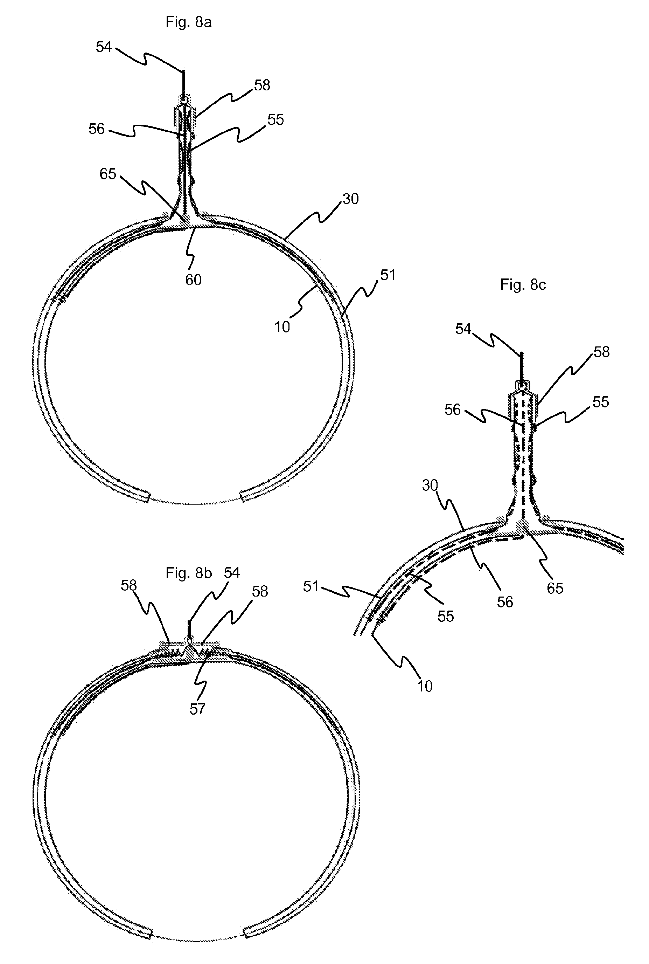

Afin de cacher l'accordéon (57) qui se forme lorsque la partie excédentaire (52) de la sangle (50) est rétractée sous l'effet des élastiques (55, 56), accordéon visible sur la figure 8b, il est préférable de munir l'anneau (54) d'un clapet (58) à deux montants qui va recouvrir l'ouverture (31, 62) lorsque l'anneau (54) viendra en contact avec le collier.

Le collier conforme à l'invention fonctionne de la façon suivante.

Pour mettre le collier au cou de l'animal, il faut tout d'abord écarter au maximum la première bande (10) de la deuxième (20). La longueur de la sangle est choisie de telle sorte que la deuxième bande (20) recouvre toujours avec ses extrémités (21) la première bande (10). On verra plus loin qu'il existe une exception à ce recouvrement systématique. Le collier a alors son diamètre maximum et la tête de l'animal peut être passée au travers du collier. Lorsque le collier se trouve au niveau du cou de l'animal, il suffit de tirer sur l'anneau (54) en retenant le collier au niveau des moyens de guidage. L'anneau tire à son tour sur la sangle (50). Celle-ci passe par les guides (12, 60) ou par l'ouverture (31) de telle sorte qu'avant ces guides ou cette ouverture, la sangle reste plaquée contre la première bande (10), mais qu'après elle dépasse hors du collier et peut s'en écarter. La sangle (50) à son tour tire sur la deuxième bande (20) et provoque le coulissement de ses extrémités (21) sur la face extérieure de la première bande (10). Le diamètre du collier diminue jusqu'à atteindre la taille du cou de l'animal. Dans cette position, des moyens de retenue (14), constitués soit par des moyens de blocage spécifiques soit par les dimensions du fourreau formé par la première (10) et la troisième bande (30) ou par l'élément en une pièce (16), assurent une retenue du collier à ce diamètre. En principe, aucune tension particulière tendant à élargir le collier n'est exercée sur ce dernier lorsqu'il est passé au cou de l'animal. Par conséquent, ces moyens de retenue n'ont pas besoin d'être très résistants.

Si la sangle (50) est munie d'élastiques de rétractation (55, 56), la partie (52) de la sangle qui dépasse hors du collier peut être rétractée contre l'ouverture (12, 31, 62) de sorte que seul l'anneau (54) dépasse du collier, comme le fait l'anneau d'un collier traditionnel. Les clapets (58) viennent recouvrir l'accordéon (57) formé par la partie (52) de la bande qui dépasse. Cet accordéon (57) est trop épais pour passer à travers les guides (12) de la sangle ou aller au-delà de l'ouverture (31) ou des fentes d'entrée (61) de la plaque de guidage. De plus, les élastiques (55, 56) peuvent remplir la fonction de moyens de retenue.

Il est possible de décorer le collier. Ainsi, la troisième bande (30), bien visible sur la partie supérieure du cou de l'animal, pourra porter des motifs décoratifs. Cette troisième bande (30) pourra également être interchangeable. Pour cela, la troisième bande (30) sera munie à ses deux extrémités de crochets (32) qui pourront s'engager sous les extrémités (11) de la première bande (10). Il est également possible de munir les extrémités (11) de la première bande d'anneaux (13) de section rectangulaire qui auront pour fonction non seulement de guider la deuxième bande (20) lors de son coulissement contre la première bande (10), mais également de fixer la troisième bande (30) en permettant aux crochets (32) de se crocheter dessus. La longueur de cette troisième bande (30) sera sensiblement la même que celle de la première bande (10) si bien qu'une fois le collier mis en place, la troisième bande (30) ne pourra pas se défaire de la première (10). Si la première bande (10) est munie d'une plaque de guidage (60) de la sangle de serrage, celle-ci (60) pourra être munie de rebords (63) sur les côtés transversaux de l'ouverture de sortie (62) qui sont parallèles aux fentes de passage (61). L'ouverture (31) de la troisième bande (30) pourra être ainsi bloquée sous les rebords (63) de la plaque de guidage (60). On pourra ainsi remplacer le décor du collier en changeant la troisième bande (60). C'est l'exemple de réalisation présenté aux figures 3 à 5.

De même, il est possible de prévoir une quatrième bande (40) qui viendra recouvrir la deuxième bande (20). Cette quatrième bande (40) pourra être fixée à la deuxième par des boutons-pression ou des bandes autoagrippantes de type Velcro®. Elle pourra également être fixées d'une part par des languettes (41) enserrant la deuxième bande (20) et munie de boutons pression ou de bandes autoagrippantes et d'autre part par des crochets venant s'engager soit directement sur les extrémités de la deuxième bande soit derrière des anneaux de section rectangulaire fixés auxdites extrémités (21) de la deuxième bande (20), de façon similaire à la fixation de la troisième bande sur la première bande présentée aux figures 3 à 5. Lorsque les extrémités (21) de la deuxième bande sont introduites dans le fourreau formé par la première et la troisième bande cousues ensemble ou par l'élément en une seule pièce (16), il peut être nécessaire de faire sortir successivement les extrémités (21) de la deuxième bande (20) du fourreau pour permettre le crochetage de la quatrième bande. Dans ce cas, l'extrémité (21) concernée ne chevauche plus la première bande (10). Il s'agit de l'exception évoquée précédemment. Pour ce faire, il faut décaler la sangle (50) et notamment l'anneau (54) par rapport au centre des moyens de guidage (12) ou des ouvertures (17, 31, 62) afin de permettre à l'extrémité (21) de se décaler d'autant par rapport à la première bande (10), laissant ainsi accessible cette extrémité pour la fixation de la quatrième bande. Ce décalage se fait contre l'effet des élastiques de rétractation. Par conséquent, cette position ne peut être atteinte que volontairement.

La sangle (50) peut faire tout le tour du collier, ce qui permet de choisir pour les bandes un matériau peu résistant. C'est la sangle (50) qui doit supporter toute la traction de l'animal lorsqu'il tire sur sa laisse. Les deux extrémités de la sangle sont cousues ensemble au niveau de l'anneau. Il n'est pas nécessaire de fixer cette sangle sur la deuxième bande, il suffit qu'elle puisse prendre appui dessus pour la remonter lorsqu'on tire sur l'anneau.

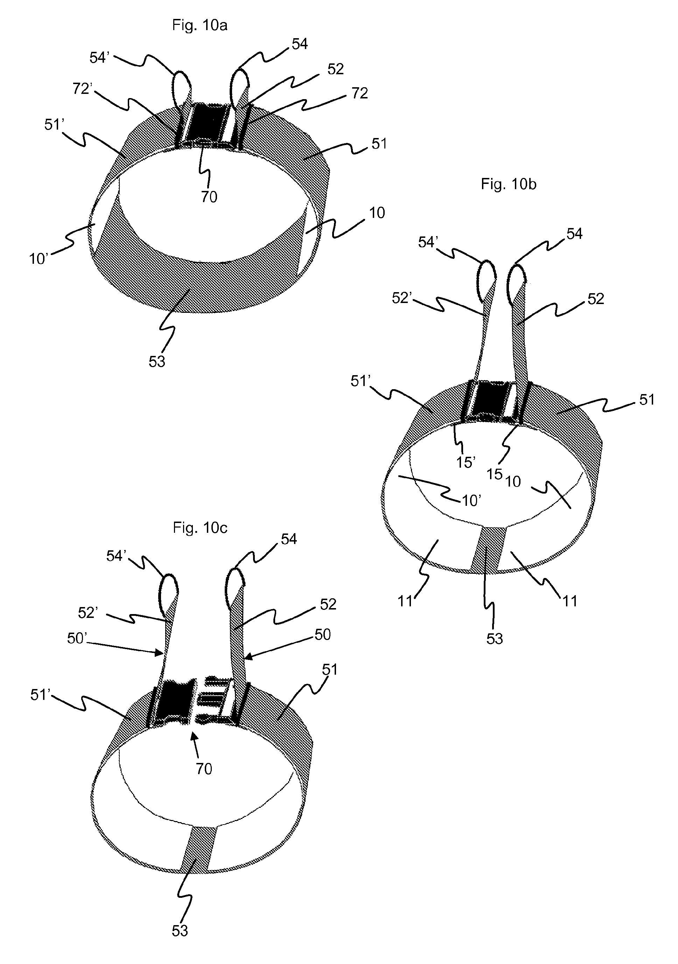

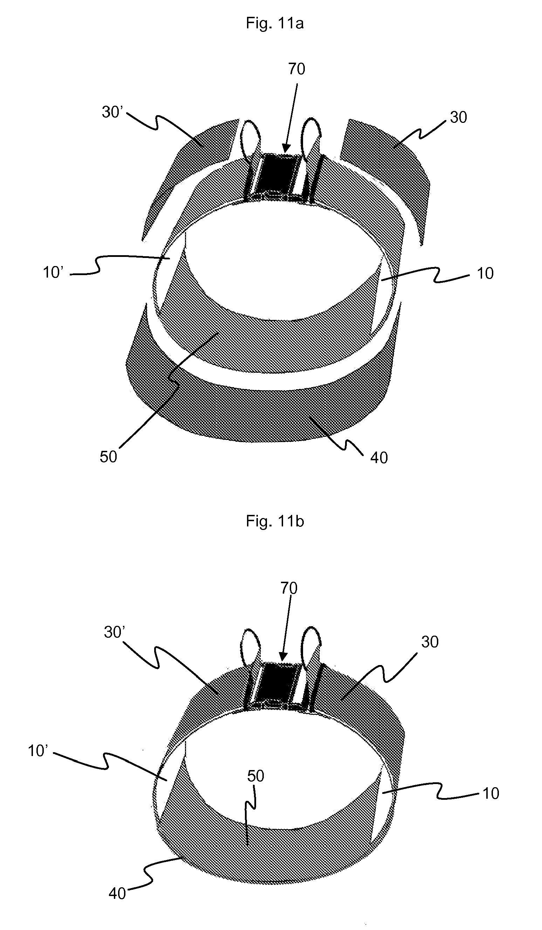

Il est également possible, comme le montrent les figures 10 et 11, que la sangle qui fait le tour du cou de l'animal fasse non seulement office d'éléments de serrage, mais également de deuxième bande. Dans ce cas, la partie centrale (53) de cette bande, bien visible sur les figures 10a et 11 remplace la deuxième bande. La sangle (50) se décompose alors en trois parties distinctes : les parties dites libres (52, 52'), les parties guidées (51, 51') et la partie centrale (53) jouant le rôle de deuxième bande. Les extrémités des parties libres (53, 53') peuvent être réunies comme dans les exemples précédents. Il est cependant également possible de les laisser séparés comme sur les figures 10 et 11.

il est cependant également possible que la sangle ne couvre pas toute la longueur de la deuxième bande. Ses extrémités sont alors fixées sur la deuxième bande et l'anneau est de préférence cousu au milieu de la sangle. Dans ce cas, la deuxième bande doit être dimensionnée pour pouvoir supporter la traction de l'animal.

Afin d'éviter de passer la tête de l'animal à travers le collier et par conséquent de toucher ses oreilles, il est possible dans une autre variante de réalisation de l'invention de couper la première bande en deux parties (10, 10') et de placer entre les deux extrémités centrales (15, 15') des deux éléments (10, 10') un élément d'ouverture (70). Celui-ci pourra être par exemple un simple clip. Dans ce cas, il est préférable que les deux extrémités (52, 52') des éléments de serrage ne soient pas jointes. Dans l'exemple de la figure 11, l'élément d'ouverture (70) inclut les moyens de guidage (72, 72'). Il serait également possible que ces éléments de guidage soient fixés sur les bandes (10, 10'). L'ensemble constitué des bandes (10, 10') et de l'élément d'ouverture (70) constitue la première bande (10).

Si la sangle a deux anneaux, il est possible de prévoir sur la première bande, sur la sangle ou sur la troisième bande un ou deux moyens de fixation sur lesquels pourront être fixés les anneaux lorsque le collier sera passé au cou de l'animal, mais que la laisse sera retirée. Il s'agit d'une solution alternative aux élastiques de rétractation.

Pour le décor d'une telle première bande en deux pièces, il faut que la troisième bande soit également en deux pièces (30, 30'). Dans le cas représenté à la figure 11, les bandes de décors (30, 30', 40) peuvent être fixées comme précédemment par des boutons-pression, des crochets ou des bandes autoagrippantes. Les bandes (10/30, 10'/30', 20/40) peuvent aussi être cousues ensemble comme dans les exemples précédents. Il est également possible que ces bandes de décors aient la forme de manches. Les manches (30, 30') de la troisième bande sont enfilées sur les parties (10, 10') de la première bande, tandis que la manche de la quatrième bande (40) est enfilée sur la sangle (50) et positionnée en son milieu. Les manches peuvent être retenues en place par exemple par des boutons-pression. La sangle (50) est ensuite positionnée sur les parties (10, 10') de la première bande et passée dans les guides (72, 72'). Il peut être également possible de placer les manches (30, 30') de la troisième bande qu'après avoir mis en place la sangle (50), munie de sa manche (40), sur les parties (10, 10') de la première bande et dans les guides (72, 72').

Les différentes bandes (10, 20, 30, 40) peuvent être réalisées dans du cuir, sous forme de bande en nylon ou en matière plastique. La sangle est de préférence en nylon. Elle peut être remplacée par un fil en kevlar.

Les différentes variantes de réalisation peuvent être combinées ensemble pour donner d'autres modes de réalisation. Notamment, la plaque (60) peut être utilisée seule comme sur la figure 3 ou associée à une troisième bande comme sur la figure 5 ou à un élément en une seule pièce comme sur la figure 7a. Il est également possible de renoncer à cette plaque (60) et d'utiliser des guides comme sur les figures 1 et 2 ou simplement l'ouverture (31) de la troisième bande (30). Les moyens d'ouverture peuvent être appliqués à toutes les variantes de réalisation.

La sangle associée aux moyens de guidage forme les moyens pour régler le diamètre du collier.

### Liste des références :

- 1: Collier
- 10: Première bande
- 11: Extrémités de la première bande
- 12: Moyens de guidage de la sangle
- 13: Éléments de guidage de la deuxième bande et de la sangle
- 14: Éléments de retenue
- 15: Extrémités centrales de la première bande en deux parties
- 16: Élément en une seule pièce
- 17: Ouverture dans l'élément en une seule pièce
- 18: Ouvertures du fourreau
- 20: Deuxième bande
- 21: Extrémités de la deuxième bande
- 30: Troisième bande
- 31: Ouverture dans la troisième bande
- 32: Crochet pour fixer la troisième bande
- 40: Quatrième bande
- 41: Bandes de fixation de la quatrième bande
- 50: Sangle
- 51: Partie guidée de la sangle
- 52: Partie libre de la sangle
- 53: Partie centrale de la sangle remplissant la fonction de deuxième bande
- 54: Anneau
- 55: Élastique de rappel de la sangle
- 56: Élastique de rappel de l'anneau
- 57: Accordéon formé par la partie 52 rétractée
- 58: Clapets
- 60: Plaque de guidage
- 61: Fentes d'entrée
- 62: Ouverture de sortie
- 63: Rebords
- 64: Rivets
- 65: Guide pour l'élastique (56)
- 70: Élément d'ouverture
- 72: Moyens de guidage de l'élément d'ouverture

## Revendications

1. Collier (1) dont le diamètre peut être réglé, notamment pour animal domestique, constitué
- d'une première bande (10),
- d'une deuxième bande (20, 53), et
- de moyens pour régler le diamètre du collier constitué de deux éléments de serrage (50, 50'), constitués chacun de préférence par une sangle ou un fil ;
- des moyens de guidage étant prévus pour guider les éléments de serrage (50, 50') sur la face extérieure de la première bande (10) ;
- l'un au moins des éléments de serrage (50, 50') étant muni d'un anneau (54, 54') ;
**caractérisé par** les caractéristiques supplémentaires suivantes :
- les extrémités (21, 531) de la deuxième bande (20, 53) sont placées par-dessus la première bande (10) de telle sorte que les extrémités (11) de la première bande (10) peuvent coulisser sur la face intérieure de la deuxième bande (20, 53) en s'approchant ou en s'éloignant du plan médian transversal de la deuxième bande (20, 53) et que les extrémités (21, 531) de la deuxième bande (20, 53) peuvent coulisser sur la face extérieure de la première bande (10) en s'approchant ou en s'éloignant du plan médian transversal de la première bande (10), les deux bandes (10, 20, 53) formant ensemble un cercle dont le diamètre peut varier selon le niveau de chevauchement de la deuxième bande (20, 53) sur la première bande (10) ; et
- chacun des éléments de serrage prolonge d'un côté et de l'autre la deuxième bande (20, 53) ou passe par-dessus celle-ci en rejoignant l'autre, et passe par-dessus la première bande (10) ;
- les éléments de serrage (50, 50') passe à travers les moyens de guidage (12, 14, 60) de sorte que la partie des éléments de serrage (51, 51') située par rapport aux moyens de guidage (12, 14, 60) du côté de la deuxième bande (20, 53), appelée partie guidée, reste en contact avec la première bande (10) tandis que l'autre partie (52, 52') des moyens de serrage (50, 50'), appelée partie libre, peut s'éloigner du collier avec le ou les anneaux (54, 54'), les moyens de guidage (12, 14, 60) de la première bande (10) étant de préférence situés de part et d'autre du plan médian transversal de ladite première bande (10).

2. Collier selon la revendication 1, **caractérisé en ce que** les éléments de serrage sont constitués par une sangle (50) ou un fil qui fait le tour complet du collier, la partie centrale (53) de la sangle (50) constituant de préférence la deuxième bande.

3. Collier selon la revendication 1, **caractérisé en ce que** les extrémités de la partie guidée des éléments de serrage (50, 50') sont fixées à la deuxième bande (20), de préférence près de ses extrémités (21).

4. Collier selon l'une des revendications précédentes, **caractérisé en ce qu'**il est muni de moyens de retenue (14) pour retenir les éléments de serrage (50, 50') dans la position souhaitée.

5. Collier selon l'une des revendications précédentes, **caractérisé en ce que** les extrémités (11) de la première bande (10) et/ou les extrémités (21) de la deuxième bande (20) sont munies de guides (13), ayant par exemple la forme d'anneaux de section rectangulaire, dans lesquels passent les extrémités de l'autre bande.

6. Collier selon l'une des revendications précédentes, **caractérisé en ce qu'**il comprend en outre d'une troisième bande (30), les extrémités (21, 531) de la deuxième bande (20, 53) et les éléments de serrage (50, 50') passant entre la première bande (10) et la troisième bande (30), la troisième bande (30) recouvrant de préférence la première bande (10) et étant de préférence fixée à celle-ci, la troisième bande pouvant être coupée en deux pièces par son milieu ou être munie en son centre d'une ouverture (31) à travers laquelle passe le ou les anneaux (54, 54') et la partie libre (52, 52') des éléments de serrage (50, 50') lorsque le collier est serré.

7. Collier selon la revendication 6**, caractérisé en ce que** la première bande (10) et la troisième bande (30) sont cousues ensemble par leurs bords latéraux ou la première bande (10) et la troisième bande (30) forment un élément en une seule pièce (16) formant un fourreau dans lequel coulissent les extrémités (21, 531) de la deuxième bande (20, 53) et les éléments de serrage (50, 50').

8. Collier selon la revendication 6, **caractérisé en ce que** la première bande (10) est munie à ses extrémités (11) de guides (13), ayant de préférence la forme d'anneaux de section rectangulaire, et **en ce que** la troisième bande (30) est munie à ses extrémités de crochets (32) pouvant s'engager sous les guides (13) de la première bande (10) en vue de la fixation de la troisième bande (30).

9. Collier selon l'une des revendications précédentes, **caractérisé en ce que** la première bande est coupée en deux parties (10, 10') et un élément d'ouverture (70) est placé entre les deux extrémités centrales (15) des deux parties (10, 10') de première bande.

10. Collier selon l'une des revendications précédentes, **caractérisé en ce que** les extrémités libres des parties libres (52, 52') des éléments de serrage sont jointes ensemble, les deux éléments de serrage (50, 50') étant de préférence constitués par une seule sangle ou un seul fil.

11. Collier selon l'une des revendications précédentes, **caractérisé en ce que** les moyens de guidage de l'élément de serrage sont constitués d'une plaque (60) fixée, par exemple par des rivets (64), sur le centre de la première bande (10), munie à ces deux extrémités d'une fente de passage (61) et en son centre d'une ouverture de sortie (62) de sorte que les éléments de serrage (50, 50') peuvent entrer dans la plaque de guidage (60) par les fentes d'extrémité (61) et en sortir avec le ou les anneaux (54, 54') par l'ouverture de sortie (62).

12. Collier selon l'une des revendications précédentes, **caractérisé en ce qu'**il est muni de moyens de rétractation (55, 56) des parties libres (52, 52') des éléments de serrage qui dépasse du collier lorsque celui-ci est partiellement ou totalement serré.

13. Collier selon la revendication 12, **caractérisé en ce que** les moyens de rétractation comprennent deux élastiques (55), chacun des élastiques (55) ayant l'une de ses extrémités solidaire d'un anneau (54) et l'autre fixée sur la deuxième bande (20), de préférence près de l'extrémité (21), ou sur la partie guidée (51, 51') des éléments de serrage (50, 50'), chaque élastique (55) étant de préférence solidaire de la partie libre (52) de l'un des éléments de serrage (50, 50), notamment en passant plusieurs fois à travers la partie libre (52) pour former un accordéon (55).

14. Collier selon la revendication 12 ou 13, **caractérisé en ce que** les moyens de rétractation comprennent un élastique (56) dont l'une des extrémités est fixée à un anneau (54) et l'autre est fixée à la première bande (10) en passant de préférence par un guide (65) situé au centre de la première bande (10).

15. Collier selon l'une des revendications précédentes, **caractérisé en ce qu'**il est muni en outre d'une quatrième bande (40) amovible pouvant recouvrir la deuxième bande (20) en étant fixé à celle-ci par des moyens de fixation, notamment par des languettes (41) pouvant enserrer la deuxième bande (20) et munies de boutons pression ou de bande autoagrippantes et/ou de moyens pour la fixer sur les extrémités (21) qui coulissent contre la première bande (10).
